# EUROPEAN PATENT SPECIFICATION

(11) **EP 3 558 046 B1**
(45) Date of publication and mention of the grant of the patent: **26.10.2022**
(21) Application number: 17822752.6
(22) Date of filing: 20.12.2017
(51) Int. Cl.: A43B 1/00, A43B 7/28, A43B 13/18, A43B 13/38, A43B 17/02, A43B 17/00, A43B 17/14, B33Y 80/00

(54) **CUSHIONING STRUCTURES OF AN ARTICLE OF FOOTWEAR FOR A HUMAN OR ANIMAL BODY**
DÄMPFUNGSSTRUKTUREN EINES SCHUHWERKS FÜR DEN MENSCHLICHEN ODER TIERISCHEN KÖRPER
STRUCTURES DE REMBOURRAGE D'UN ARTICLE CHAUSSANT POUR UN CORPS HUMAIN OU ANIMAL

(30) Priority: 20.12.2016 GB 201621769
(43) Date of publication of application: 30.10.2019
(73) Proprietor: Staffordshire University, Stoke-on-Trent, Staffordshire ST4 2DE (GB)
(72) Inventor: CHATZISTERGOS, Panagiotis, Stoke-on-Trent Staffordshire ST4 2DE (GB); CHOCKALINGAM, Nachiappan, Stoke-on-Trent Staffordshire ST4 2DE (GB); NAEMI, Roozbeh, Stoke-on-Trent Staffordshire ST4 2DE (GB)
(74) Representative: Adamson Jones
(86) International application number: PCT/GB2017/053844
(87) International publication number: WO 2018/115874

(56) References cited:
- US-A- 4 535 553
- US-A1- 2005 155 255
- US-A1- 2011 072 748
- US-A1- 2012 005 920
- US-A1- 2013 291 399
- US-A1- 2016 235 158

## Description

This disclosure concerns a cushioning structure of an article of footwear for a human or animal body and a method of producing the cushioning structure.

One technical field in which it is desirable to provide bespoke support structures is for footwear. It is generally known that the thickness of cushioning materials that are used as shoe midsole/insole can be varied over its area to provide differing degrees of cushioning. Whilst this approach is generally accepted for providing mass-produced, standard shoe designs, it is less practical for bespoke orthoses that are tailored to specific individual's needs.

Conventional cushioning materials, such as polyuerethane foams and the like, have predetermined material properties over the area of the sole and thus, when new, provide a predetermined response to applied pressure. That is to say, the resistance to applied pressure will increase in a predictable manner as the foam material compresses down to a fully compressed condition, at which point minimal further cushioning effect is provided. The manner in which the cushioning effect is tailored is thus by increasing the thickness/depth of the foam rather than the nature of the response to applied load.

Conventional foam materials do not expand immediately when the applied load is removed. Thus repeated cyclic loading above a certain frequency results in diminished effectiveness.

Furthermore, conventional foam materials used in orthoses degrade with repeated use. That is to say, continuing compression/expansion cycles during use serve to reduce the material's cushioning effect, whereby the material becomes permanently flattened or compressed over time. This process is gradual and so it is difficult to predict precisely when the orthosis becomes unfit for use or precisely what cushioning effect is being provided over a period of use.

In order to tailor shoes for a wearer, one approach is to provide a bespoke foot orthosis in the form of an insole. Insoles may supplement the function of the midsole but will also typically degrade if using conventional compressible materials.

UK Patent GB2508204 discloses a system for additive manufacturing, i.e. so-called 3D printing, of a foot orthosis in which materials of differing Shore hardness are applied in different regions, such as layers, in order to provide different compressibility.

In that example, a Computer Aided Design (CAD) system is used to alter an initial model to suit an individual for whom the orthosis is intended.

However it has been found that the use of a bespoke 3D printing process that requires two materials introduces complexity to the manufacture process. Such a manufacturing technique cannot be readily widely adopted at this point in time. Furthermore, the reliance on material selection can hamper the freedom with which the insole can be customised or graded for the wearer's needs. Ultimately, if conventional compressible materials are used, then the cushioning properties will degrade with repeated use.

US2013/291399 discloses a shoe insole comprising a spacer fabric comprising a bottom layer, a top layer, and a plurality of interconnecting filaments extending between said bottom layer and said top layer; wherein at least one of said bottom layer, said top layer and said plurality of interconnecting filaments comprise a shape memory material. US2016/235158 discloses orthotics and methods for forming orthotics. The orthotics can be designed with a patient-specific design and can include variation in hardness across the orthotic so as to satisfy clinical need.

It is an aim of the present invention to provide a support structure or orthosis for humans or animals which offers alternative mechanical properties. It may be considered an additional or alternative aim to provide a support structure which mitigates one or more of the above-described problems.

The invention is set out in the appended set of claims.

The partition material properties may comprise the material stiffness, resilience and/or elasticity, the geometric properties may comprise the area, wall thickness, height, length and/or breadth of the partition walls, and the arrangement within the network may comprise the number of neighbouring/adjacent cells and/or the cell density. The stiffness of the structure may or may not vary over the area of the support structure.

The reversible collapse of the upstanding partition walls may comprise buckling or crushing of the upstanding partition walls. It has been found that the upstanding partition wall yielding in this manner can provide a beneficial additional cushioning effect for a number of applications.

The first mode may be considered to provide resilience to deformation primarily according to the material properties of the upstanding partition walls, e.g. elastically. In the second mode the upstanding partition walls may undergo gross deformation according to the mechanical and/or structural behaviour of the upstanding partition wall network.

In the first mode and/or at-rest, the upstanding partition walls may or may not be generally planar in form. In the first mode, the upstanding partition walls may be curved, arched (e.g. in a single sense or direction) or angled.

In the second mode, the upstanding partition walls may comprise one or more kink, corner, fold and/or crease. The upstanding partition walls may be deformed out of the plane in which they extend in the first mode.

The cells may or may not be of substantially common cross-sectional area or profile for the height of the upstanding partitions.

One or more upstanding partition wall may comprise a boundary partition, enclosing a cell, for example providing one or more side or perimeter wall of the cell.

The network of upstanding partition walls may comprise a grid, lattice or framework in plan. A layer of adjacent cells may be provided by the network, e.g. covering an area of the support structure in plan. One or more layer may make up the support structure. Each layer may be a single cell in depth.

The network of upstanding partition walls may be arranged in a regular and/or repeating pattern. The upstanding partition walls may define polygonal or circular cells. Each cell may be of a common shape, e.g. polygonal shape. Alternatively, the support structure may comprise a plurality of differently shaped cells.

The cells may have three, four, five, six or more sides.

Each cell may share an adjoining partition wall or partition portion with at least one adjacent cell. Each cell may share an adjoining partition wall or partition portion with a plurality of adjacent cells, such as three, four, five, six or more adjacent cells.

The upstanding partition walls and/or cells may define a tessellating pattern over an area to provide support in use.

The cell density may be uniform or varied over the area to be supported. The cell width may be uniform or varied through the support structure.

The cell density or width/area may be varied according to a predicted pressure distribution over the support structure in use. The cell density may be relatively greater, and/or the cell width/area relatively reduced, for regions where the applied load is expected to be higher.

A length dimension of each of said edges of the upstanding partition walls may be uniform or may vary over the support structure.

There may be a third mode of operation, e.g. after the applied load has passed a second threshold criterion or load value. The third mode of operation may comprise resilient compression of the collapsed partition walls.

The first threshold may comprise a pressure and/or strain threshold. The second threshold may comprise a pressure and/or strain threshold.

Each upstanding partition wall may meet an adjacent partition at a vertex. Three or more upstanding partition walls may meet at a common vertex. An acute angle may be defined between adjacent/adjoining upstanding partition walls.

The support structure may comprise tens or hundreds of cells.

The support structure may comprise a base layer. The upstanding partition walls may depend upwardly/outwardly from the base.

The height of the upstanding partition walls may be constant or may vary over the area of the support structure, for example according to the intended applied pressure distribution in use.

The wall thickness of the upstanding partition walls may be constant or may vary over the area of the support structure, for example according to the intended applied pressure distribution in use.

The upstanding partition walls may comprise an elastomer material.

The cushioning structure may comprise a sole component of a shoe, such as an insole or mid sole.

The upstanding partition walls may or may not be of uniform wall thickness, e.g. between opposing edges thereof, e.g. between upper and lower edges/surfaces of the structure. The upstanding partition walls may be complete or incomplete walls. The upstanding partition walls may comprise elongate elements or beams, e.g. laid one atop another.

Each opposing major surface may be substantially flat (e.g. two-dimensional or planar) or three-dimensional (e.g. profiled).

The geometric property may further comprise the cell width and/or the cell length. The cell shape may comprise a polygonal shape, a polyhedral shape or a number of sides/walls thereof..

The structure may be manufactured by an additive manufacturing process.

The structure may thus be tailored to its intended use.

The upstanding partition walls resist an applied load in two modes, a first mode comprising resilient compression of the upstanding partition walls up to a first load threshold and a second mode comprising reversible collapse of the upstanding partition walls beyond the first load threshold. The upstanding partition walls may be configured to enter the second mode of deformation over only a portion of the structure for the given pressure distribution. The upstanding partition walls may be configured to enter a third mode of deformation over only a portion of the structure for the given pressure distribution.

Any of the optional features described in relation to the first aspect may be applied to the second aspect and vice versa.

Practicable embodiments of the present invention are described in further detail below with reference to the accompanying drawings, of which:
Figure 1 shows a three-dimensional view of a support structure according to an example of the present invention;
Figure 2 shows an example of a plot of stress against strain for a support structure according to the invention;
Figure 3 shows plot of stress against strain for an example of the invention alongside two examples of plots for conventional support structures;
Figure 4 shows a graph of cell infill density against pressure threshold for an example support structure according to the present invention;
Figure 5 shows a plantar pressure distribution for to be accommodated using a support structure in accordance with an example of the invention;
Figure 6 shows a layout of infill density for an insole according to an example of the invention;
Figure 7 shows a plan view of example transitions between different cell sizes/shapes within a support structure according to the invention; and,
Figure 8 shows a partition arrangement for use in creating cells according to an example of the invention.

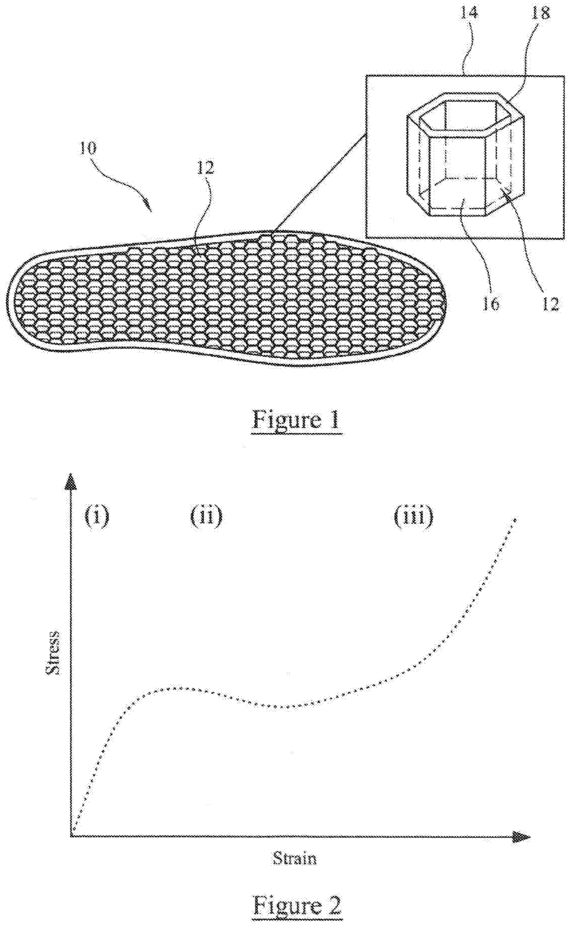

Turning to Figure 1, there is shown a structure 10 spanning an area having length and width dimensions that are substantially greater than the depth of the structure.

The support structure is shaped in the form of an insole for footwear.

Examples of the invention designed for footwear may be referred to as 'foot beds'. In footwear, amongst other examples of the invention, the structure may be more generally referred to as a cushioning material.

The support structure 10 of Figure 1 is comprised of multiple interconnected cells 12 of the kind shown in the enlarged section 14. The cells 12 comprise a hollow interior having a perimeter defined by one or more upstanding partition, which in this example takes the form of a complete side wall 16. In the example of a circular cell, the side wall would be curved in section. However in the present example, the cell is defined by a number of adjoining side walls 16, which are planar in form, thereby forming a cell which is polygonal both in section and in plan. The side wall(s) completely enclose the hollow interior of the cell when viewed in plan/section. In other examples, the partitions may comprise walls formed of multiple adjoining or adjacent elements, thereby defining profiled or incomplete walls having openings therein.

Whilst a constant profile, i.e. an extruded shape, is described in relation to Figure 1, it will be appreciated that the manufacturing methods disclosed herein would also allow production of cells having non-constant shape/area between opposing sides of the support structure 10. Such shape variables may be used to tailor the behaviour/properties of the cells as desired.

The cells 12 in Figure 1 take the form of hexagons, such that the structure can be defined as a honeycomb.

Honeycomb structures are known in engineering fields to provide lightweight but strong rigid structures. However according to aspects of the present invention, the support structure is deformable and the honeycomb structure is arranged to resist loading in a direction substantially parallel with or at a small acute angle to the direction in which the upstanding walls 16 extend.

The cells 12 in the example of Figure 1 are shown as being open, i.e. open-ended. This is so that the structure of the cells is visible. Whilst the support structure may be formed as shown in Figure 1, practical embodiments, will typically have a base and/or top layer from which the upstanding walls depend. The walls 16 may or may not be integrally formed with such a base and/or top layer. In other examples, the support structure may be sandwiched between suitable base and top later materials. For any open cell shapes, a base and/or top layer may comprise a complete layer, e.g. as opposed to the open cells 12 of the support structure. However in other examples, the cells themselves can be formed as closed cells.

The base layer may comprise a harder material so as to provide a support or platform, on which the structure 10 can be disposed.

The partitioned/walled support structure 10 is formed of a resiliently deformable polymer, such as a thermoplastic elastomer. The hardness of the material will be selected according to the specific weight/impact bearing properties required.

The upper edges 18 of the upstanding walls 16 collectively define an upper surface of the support structure, which can resist an applied load in use in a manner which distributes the applied load across some or all of the cells 12. Whilst the cells of Figure 1 are described as being air-filled, it is not intended that the cells are air tight, that is to say, it is the mechanical behaviour of the network of upstanding walls 12 that provides the desired cushioning behaviour in response to an applied load, rather than air trapped therein.

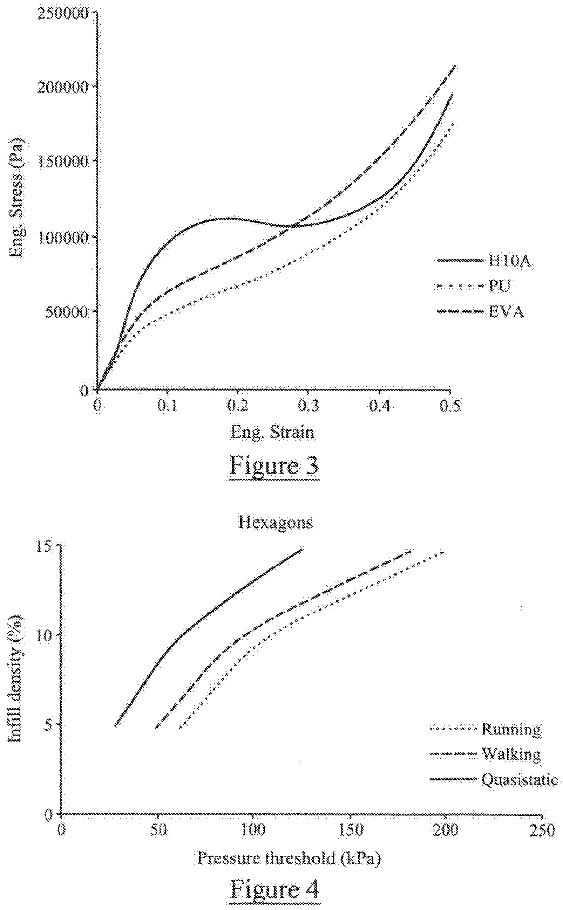

Upon application of a load/pressure onto the support surface of the structure 10, the elements/cells 12 exhibit mechanical behaviour that can be divided into three distinct modes or zones, (i), (ii) and (iii) as shown in the schematic stress/strain graph of Figure 2. It is to be noted that whilst Figure 2 shows a stress/strain graph, a similarly shaped plot (i.e. a similar response) would be seen for a force/displacement graph and any of the below description of Figures 2 and 3 may also apply to such a graph.

In zone (i) the support structure 10 behaves like many other resiliently deformable materials, such that the support structure undergoes elastic compression, wherein the internal stress within the material resists the force applied thereto, e.g. in a generally linear manner. The gradient of this portion of the graph is thus due to the Young's Modulus of the support structure material.

However in zone (ii) the stress/strain or force/displacement relationship changes. In zone (ii), the behaviour can be described as strain softening. That is to say, beyond a predetermined value of strain, i.e. beyond a corresponding value of applied load, the upstanding walls 16 will buckle or collapse so as to cause a second type or mode of mechanical response. The walls 16 will thus yield under compressive stress and will deform out of the plane of the walls when at rest. This causes the height of the walls to reduce more rapidly than the compression that occurs in zone (i).

In Figure 2, it can be seen that in zone (ii) the shape of the graph changes and the gradient reduces significantly before increasing again in zone (iii). The graph thus changes from a concave to a convex form by way of an inflexion.

In different examples of the invention, according to selection of relevant properties for the support structure, such as the hardness/softness of the material, the wall thickness, the cell size/are, and the wall height, the gradient may either approach zero, become zero, or become negative within zone (ii). In the latter example of a negative gradient, the graph will achieve a zero gradient at two spaced points of the curve, a first point at which the gradient is reducing and a second point at which the gradient is increasing.

Once the upstanding walls 16 have collapsed, increasing strain further will cause a positive gradient in zone (iii). The collapsed structure will thus be compressed further and the rate of elastic deformation of the walls in this form will decrease as the structure approaches its elastic limit, i.e. its compressive strength.

When the applied pressure is released, the walls typically revert back to their upstanding condition very quickly, e.g. akin to 'snapping' back to an un-deformed condition. This can occur more quickly than a conventional foam material which will typically expand more slowly as it approaches its un-deformed condition.

In Figure 3, the compression behaviour of the honeycomb/hexagonal support structure 10 is compared to that of conventional foams that are used in foot beds for diabetic footwear to relieve pressure. The mechanical behaviour in zone (ii) is thus markedly different from the foam materials, which maintain a strongly positive gradient throughout the compression process. In the example shown, the upstanding wall structure maintains the initial gradient for longer in zone (i), e.g. closer to a linear stress/strain relationship, than the foam material. Thus the support structure 10 will resist small loads to a greater degree and will provide a relatively firm support prior to collapse in zone (ii).

Thus the support structure according to the present invention can significantly alter the response to different loading conditions, whereby applied pressure can be offloaded in an effective manner.

The stress/strain response or force-deformation behaviour of the structure 10, or individual cells 12 thereof can be modelled by way of a polynomial, such as a cubic polynomial equation. In order to determine the inflection point it is possible to analyse a derivative of the polynomial equation for stress or force respectively. In one example, the point at which the second derivative is equal to zero may represent the inflection point, i.e. where the curve changes from concave to convex.

From this relationship, a value for strain/displacement threshold can be obtained so as to define where the interface between zones (ii) and (iii) occurs. This may represent a threshold at which the mechanical behaviour changes a second time during loading.

Whilst the above results are useful for a quasi-static loading analysis over the entire support structure, it is a key consideration that loading will typically be highly transient and uneven over the area of the support structure. In this regard, the support structure 10 offers beneficial offloading or load transfer through the support structure since the cells share adjoining walls. Thus certain cells experiencing the greatest loading will collapse first, thereby transferring some of the loading to adjacent walls and/or cells. In this manner of communicating loads between neighbouring cells and/or adjoining walls, the reaction force applied back to the contacting foot, or other body portion, can be spread over a wider area, thereby relieving pressure.

One advantage of the support structure according to the invention is that it may be tuned to suit a bespoke application or user. For example the first and/or second threshold for altering the transition between mechanical response modes can be tailored for the structure. However the nature of the structure allows far more customisation options. For example, any or any combination of the following parameters can be altered to suit a bespoke application:
- Hardness/resilience of the material used to create the support structure
- Cell area, cell density and/or cell count (e.g. a measure of cell size relative to the total area of the support structure)
- Cell shape (e.g. in plan or section), including circular, triangular, quad, etc, for example including variations of regular or irregular shapes and/or a mixture of different shapes within different portions of a common support structure
- Wall thickness (constant or variable for different cells/regions of the support bed)
- Wall orientation or shape, including straight, planar walls that may be vertical or angled walls/faces, e.g. according to whether the cell section is constant or variable with height. Curved walls may be considered.
- Wall height (constant or variable)
- Support structure covering

The above parameters can individually or collectively be altered to change the stiffness of the support structure as a whole or in selected regions as well as to tune the profile of the mechanical response.

In order to demonstrate the capacity for mechanical fine-tuning the effect of infill density on the primary pressure threshold was assessed for loading conditions simulating standing, walking and running. More specifically cylindrical samples of a foot-bed filled with hexagonal elements and infill densities ranging between 5% and 15% were tested under compression for loading rates 1mm/min, 20mm/sec and 30mm/sec for quasi-static loading and loading that simulates walking and running respectively. The results shown in Figure 4 indicate that pressure threshold increases with infill density but it was also surprisingly found that the threshold is affected by loading rate (i.e. the foot-bed elements are capable of carrying higher loads before collapsing when loading is more dynamic). This therefore offers a different response to a conventional foam, e.g. for which the viscoelastic properties can be tailored to the specific needs of individuals to offer optimum cushioning under different dynamic loading conditions.

The relationship between foot-bed infill density (D) and pressure threshold (P) can be expressed using suitable equations. In this example of foot bed support structure, suitable polynomials (e.g. second order polynomials) were determined from empirical data.

Equations of this kind enable the calibration of material function based on different loading scenarios (loading rates and pressure threshold for offloading) and can be tailored to the specific structural geometry and material used. Based on derived information, it can be concluded that the primary pressure threshold can be calibrated for different loading magnitudes and loading rates and therefore for different activities such as slow or fast walking.

The mechanical characteristics of the support structures for footbeds can be optimised on a subject specific basis based on measurements or estimations of the loading they are going to experience. With these, and any other types of support structure, the parameters of primary pressure threshold, secondary strain threshold, initial stiffness, etc may be individually or collectively tailored with the aim of distributing pressure more evenly throughout the support structure 10.

Based on the above findings, it is proposed that an infill density optimisation algorithm (iDOA) can be generated. A key factor that will be used for the optimisation of density is the pressure threshold that triggers the transition between initial behaviour to strain softening (transition from (i) to (ii) in Figure 2). In other examples of the invention, the threshold that triggers the transition from the second to the third mode of deformation may be used in conjunction with, or instead of, the transition from the first to the second mode. For example, in certain structures the transition from the first to the second mode of deformation may be less pronounced, i.e. more gradual in nature, such that the transition from collapse to elastic compression may become a more important consideration in tailoring the structure to a desired behaviour.

A density protocol for footbeds is defined below, which may be implemented as a software application or design process:

### Initialisation:

- Information about plantar pressure distribution (or information that can be used to infer plantar pressure distribution).
- Anthropometric parameters input
- Selection of physical activity level (i.e. walking pace)

### Estimation of pressure thresholds:

- Identification of zones that are loaded differently therefor need different infill densities.
- Assessment of the average pressure expected to be applied in these zones.

### Density mapping:

- Scaling of a predefined foot-bed template to patient's shoe size.
- Importing pressure zones into foot-bed template.
- Calculation of infill density for each zone, e.g. using the previously estimated pressure thresholds and the equations provided above

### Density map export:

- Export of density map in a format that can be read by the 3D printer.

The different phases/modules for the above process are described in further detail below.

During initialisation, the parameters for the tuning process are configured and the data needed to calculate the pressure thresholds are imported. More specifically in this example, the optimisation parameters include the subject's body weight (BW), shoe size, level of physical activity etc. Information about pressure distribution can be acquired using biomechanical measurements such as barefoot or in-shoe plantar pressure measurements. Considering the fact that biomechanical measurements are usually costly and time consuming processes information about plantar pressure distribution can also be inferred using 2D or 3D plantar images of the fully loaded or partially loaded foot.

During the second phase of the iDOA the pressure values that will inform density selection are calculated. If in-shoe or barefoot plantar pressure measurements are available they will directly be used to separate the plantar surface into zones of different pressure (e.g. areas of high, medium and low pressure etc.) and directly calculate average pressure in each one of these zones. If load bearing 2D/3D scans of the foot are available the scan images can be used to identify the loaded areas of the foot during standing. These areas will be assumed to be areas of "high pressure". Results may be provided as two dimensional zones or areas of the foot profile or the contact area between the foot and a support surface. The total contact area can be divided into rear foot and forefoot regions and assumed to be areas of high pressure. Considering a specific activity (or range of activities) the maximum total net force that is expected to be applied on these regions can be estimated. Normalising these force values over the area provides an estimation of average pressure for the rear foot and forefoot regions. These pressure values will be utilised in the next phase of the iDOA to inform density selection.

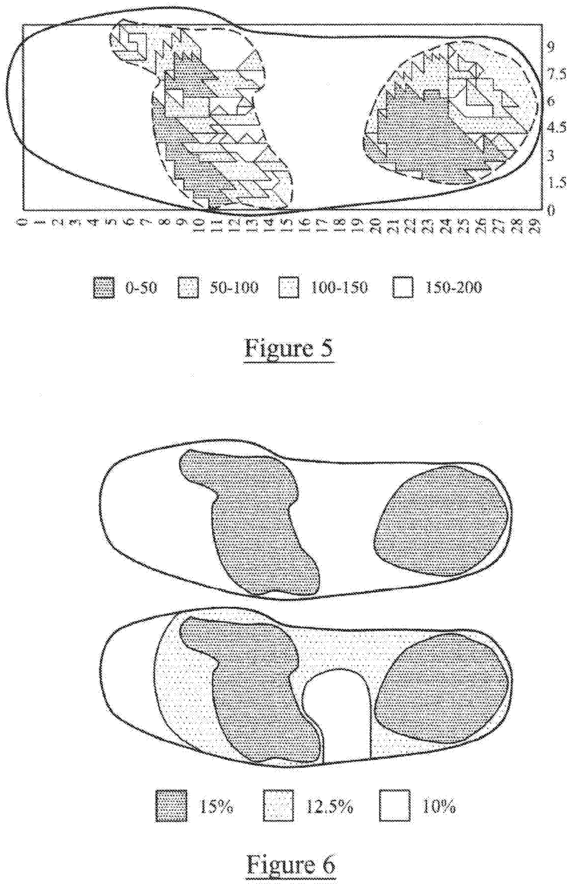

For demonstration purposes at this stage the iDOA will be implemented using plantar pressure measurements. Figure 5 shows an example of the plantar pressure for barefoot standing. As it can be seen the contact areas of rear foot and forefoot can be easily identified and outlined. Plantar pressure distribution may thus be quantified, e.g. in kPa. These areas could also be identified using 2D/3D images of the load bearing foot or other techniques known in the art.

Regardless of the technique used, the contact/pressure areas can be calculated, e.g. in cm². A maximum ground reaction force during the relevant action (i.e. standing, walking, running) can be estimated, e.g. as a multiple of the person's body weight. From the area and maximum force, the pressure thresholds for the different rearfoot and forefoot regions can be calculated, e.g. in kPa.

The previously defined areas are imported into a digital foot-bed template in order to perform cell density mapping or determination. Infill density within the forefoot and rear foot regions can be uniform and its value will be calculated using the previously estimated pressure thresholds and the equations disclosed above for stress-strain and strain threshold. A safety factor could also be used lowering or increasing the maximum pressure the elements can withstand before collapsing. The density of the rest of the insole will be lower compared to rear foot and forefoot regions and its value/values will be automatically calculated based on predefined functions.

Considering the previously estimated pressure thresholds and the fact that in this example we want to optimise the foot-bed for walking, the density of the rear foot and forefoot regions are calculated from cell density polynomial given above as 15.18% and 15.16% respectively. Figure 6 shows two possible density maps: an upper one where only areas of "high" and "low" pressure are defined and a lower one where areas of "medium" pressure are also shown. A more detailed density mapping is also possible where the pressure threshold of individual elements is separately calculated based on pressure measurements.

The example given above provides one technique by which cell density can be customised for an individual's needs. It will be appreciated that similar models can be developed for any or any combination of the variable parameters described above for the support structure for a variety of different applications.

In the example of shoes beds, the cells in the vicinity of the heel during heel strike, as well as the cells in the fore foot region during push-off, experience the greatest pressure and so the cells in those regions are configured to collapse at, before, or close to, peak normal pressure such that the support structure will transfer the loads to regions of the foot which typically experience lower pressure using conventional footwear.

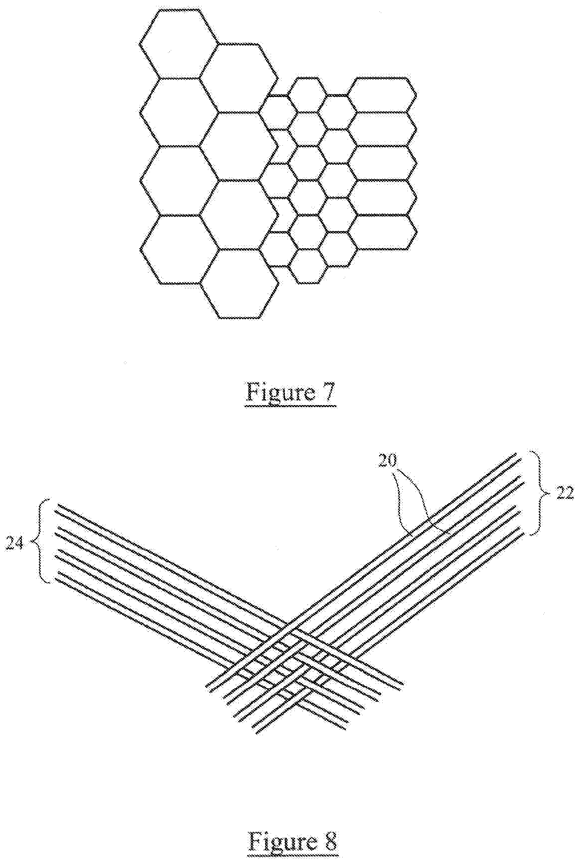

In Figure 7, there is shown examples of how different cell sizes may be arranged side by side, e.g. at an interface or transition between zones of the structure. On the left had side of Figure 7, it can be seen that regular hexagons may mate with regular hexagons of smaller area, whereas on the right hand side of figure 7, it can be seen that elongate hexagons may be defined which tessellate with regular hexagons. Thus not only the number of sides of the cells may be customised but also the nature of each polygon as required, e.g. to accommodate directional loading, or the like. Any gaps in the cell structure to mismatch between cell types may be filled in with a cell of suitable shape. For example, hexagonal cells may interface with quadrilateral cells by providing intermediate triangular cells.

An advantage of the present invention is that the support structure can be produced using additive manufacturing, i.e. 3D printing. The output of the design process described above may be a CAD model or other data file type capable of being accepted by a 3D printer.

One type of wall/partition structure for the cells, which is well suited to 3D printing, is shown in Fig. 8. In this example, the partitions are formed by laying down of layers or beams 20, e.g. one atop another, so as to build up the wall structure from its base. In this example the beams 20 of one partition 22 are interspersed with beams of an adjoining partition 24 (i.e. a further partition oriented at an angle to the first partition 22).

Thus beams of a single cell or adjoining cells can be effectively stacked.

The provision of a beam-like structure of this kind allows further variability in the support structure. For example, the infill density using beams may differ from that of uniform thin walls. Perhaps more significantly, the beam structure allows further tuning of the mechanical behaviour in response to applied load. A beam structure which is non-uniform in wall thickness (i.e. when viewed in section) may allow a less pronounced collapse mode in comparison to the initial mode of deformation. Additionally or alternatively, the beam structure may be softer or more compliant in the initial mode of deformation, prior to collapse.

When compared to the stress/strain graph of figure 3, for example, a non-uniform or beam-like partition structure may behave somewhere in between the uniform thin walled structure and a conventional foam. However, unlike a conventional foam, the partitioned cell structure of figure 8 will typically return reliably and quickly to its un-deformed state when the applied load is removed.

A series of prototypes have been produced based on 3D images of the partially load bearing foot. These prototypes have been 3D printed using fused deposition modelling (FDM) and thermoplastic elastomer materials. However these are provided as examples only and the invention is not limited to any specific additive manufacturing technique or specific material type save to say that the material must be resiliently/elastically deformable within the desired loading range.

Support structure variants have been prototyped for flat (i.e. constant height) support structures and well as contoured (form fitting) structures to follow the contour of the foot. The variable height support ban be achieved either by having variable wall height in the cell structure 10 or else by applying a covering, e.g. a foam overlay of varying height profile.

A single layer support structure or a plurality of layers may be provided. The different layers may have different properties, such as infill densities, cell shapes, thicknesses or the like. A top layer with uniform infill density may be used for example to improve compliance/conformity. The density of the top layer is decided based on the application and on a case by case basis.

In any example, the support structure 10 may be provided with a base and/or top layer. Either of the base or top layer may comprise a sheet-like, relatively thin layer, or else a layer having a depth suitable to provide additional cushioning properties. This can also be made from open cell or closed cell elements, a foam or other conventional compressible support material.

Thus the support structures described herein may be used in conjunction with other pressure relieving materials, such as a foam layer or the like which may lie across either or both major surfaces of the support structure.

The height depth of the support structure and/or walls thereof may be in the region of 2 or 3 mm to 20 or 30 mm depending on the different applications to which it is applied.

In other examples of the invention, support structures of the type described above can be used for other footwear components, such as midsoles, arch plugs, metatarsal beams/pads, heel plugs, or shoe uppers, e.g. for protective footwear.

## Claims

1. A cushioning structure (10) of an article of footwear for a human or animal body, the structure comprising:
a network of resilient upstanding partition walls (16), the upstanding partition walls (16) defining a plurality of cells (12) there-between and each upstanding partition wall (16) extending in a direction between opposing major surfaces of the cushioning structure (10), wherein the partition walls (16) comprise a polymer material and are configured to resist a load applied to a major surface of the support structure (10) in two modes, a first mode comprising resilient compression of the upstanding partition walls (16) up to a first loading threshold and a second mode comprising reversible collapse of the upstanding partition walls (16) beyond the first loading threshold,
wherein one or more geometric property of the cells (12) within the network is tailored to achieve the behaviour in response to an applied load, and
wherein the one or more geometric property of the cells (12) varies over the area of the support structure (10) surface according to a predicted pressure distribution of the applied load over the support structure (10) in use.

2. A structure (10) as defined in claim 1, wherein each cell (12) comprises a plurality of adjoining partition walls (16) wherein the reversible collapse of one partition wall (16) causes distribution of load to the plurality of adjoining partition walls (16), thereby potentially causing collapse of one or more of said adjoining partition walls (16).

3. A structure (10) as defined in any preceding claim, wherein the cell density of the cells (12) within the network is tailored to achieve the behaviour in response to an applied load.

4. A structure (10) as defined in Claim 3, wherein the geometric property of the cells (12) that varies over the area of the support structure (10) surface according to a predicted pressure distribution of the applied load over the support structure (10) in use is the cell density.

5. A structure (10) as defined in any preceding claim, wherein the network of upstanding partition walls (16) is provided in a regular and/or repeating pattern, thereby defining a regular array of polygonal or circular cells (12).

6. A structure (10) as defined in any preceding claim, wherein the cells (12) are hexagonal in section, thereby defining an upstanding honeycomb structure.

7. A structure (10) as defined in any preceding claim, wherein the one or more geometric property of the cells (12) that is varied over the area of the support structure (10) surface is any or any combination of the cell height, cell width, cell length, cell shape and/or partition wall thickness.

8. A structure (10) as defined in any preceding claim, wherein the structure (10) resists applied load according to a third mode of mechanical behaviour, the third mode comprising resilient and/or elastic compression of the collapsed partition walls (16) beyond a second threshold for the applied load, wherein the second threshold comprises a strain threshold.

9. A structure (10) as defined in any preceding claim, wherein the upstanding partition walls (16) comprise a stack of elongate beams (20) lying one atop another.

10. A structure (10) as defined in Claim 9, wherein the elongate beams (20) of the upstanding partition walls (22) are interspersed with the elongate beams (20) of adjoining partition walls (24).

11. A structure (10) as defined in any preceding claim, wherein each cell (12) shares an adjoining partition wall (16) or partition wall portion with at least one adjacent cell (12).

12. A structure (10) as defined in any preceding claim, wherein the structure (10) is manufactured by an additive manufacturing process.

13. A structure (10) as defined in Claim 12, wherein the additive manufacturing process is 3D printing.

14. A method of producing the structure (10) according to any preceding claim, comprising obtaining a pressure distribution on a foot-bed for a body to be supported in use, determining one or more mechanical parameter for the structure (10) comprising the network of resilient upstanding partition walls, the upstanding partition walls (16) defining a plurality of cells (12) there-between, each upstanding partition wall (16) extending in a direction of an applied load in use, wherein the one or more mechanical parameter comprises any or any combination of cell density, cell shape, cell height and/or wall thickness, wherein the mechanical parameter is varied over the structure according to a desired mechanical response to the pressure distribution, and manufacturing the support structure (10) having said variation in the one or more mechanical parameter through the structure.

15. A production method according to claim 14, wherein the structure (10) is manufactured by an additive manufacturing process.

## Patentansprüche

1. Dämpfungsstruktur (10) eines Schuhwerks für einen menschlichen oder tierischen Körper, wobei die Struktur Folgendes umfasst:
ein Netzwerk aus elastischen, aufrecht stehenden Trennwänden (16), wobei die aufrecht stehenden Trennwände (16) eine Vielzahl von Zellen (12) dazwischen definieren und sich jede aufrecht stehende Trennwand (16) in einer Richtung zwischen gegenüberliegenden Hauptflächen der Dämpfungsstruktur ( 10) erstreckt, wobei die Trennwände (16) ein Polymermaterial umfassen und dazu konfiguriert sind, einer auf eine Hauptfläche der Stützstruktur (10) aufgebrachten Last in zwei Modi zu widerstehen, wobei ein erster Modus eine elastische Kompression der aufrecht stehenden Trennwände (16) bis zu einer ersten Belastungsschwelle umfasst und ein zweiter Modus ein reversibles Zusammenklappen der aufrecht stehenden Trennwände (16) über die erste Belastungsschwelle hinaus umfasst,
wobei eine oder mehrere geometrische Eigenschaft der Zellen (12) innerhalb des Netzwerks darauf zugeschnitten ist, das Verhalten als Reaktion auf eine aufgebrachte Last zu erreichen, und
wobei die eine oder mehrere geometrische Eigenschaft der Zellen (12) über den Bereich der Oberfläche der Stützstruktur (10) entsprechend einer vorhergesagten Druckverteilung der aufgebrachten Last über der Stützstruktur (10) im Gebrauch variiert.

2. Struktur (10) nach Anspruch 1, wobei jede Zelle (12) eine Vielzahl von angrenzenden Trennwänden (16) umfasst, wobei das reversible Zusammenklappen einer Trennwand (16) eine Lastverteilung auf die Vielzahl von angrenzenden Trennwänden (16) bewirkt, wodurch möglicherweise eine oder mehrere der angrenzenden Trennwände (16) zusammengefaltet werden.

3. Struktur (10) nach einem der vorangehenden Ansprüche, wobei die Zelldichte der Zellen (12) innerhalb des Netzwerks darauf zugeschnitten ist, das Verhalten als Reaktion auf eine aufgebrachte Last zu erreichen.

4. Struktur (10) nach Anspruch 3, wobei die geometrische Eigenschaft der Zellen (12), die über den Bereich der Oberfläche der Stützstruktur (10) entsprechend einer vorhergesagten Druckverteilung der aufgebrachten Last über der Stützstruktur (10) im Gebrauch variiert, die Zelldichte ist.

5. Struktur (10) nach einem der vorangehenden Ansprüche, wobei das Netzwerk von aufrecht stehenden Trennwänden (16) in einem regelmäßigen und/oder sich wiederholenden Muster bereitgestellt ist, wodurch eine regelmäßige Anordnung von polygonalen oder kreisförmigen Zellen (12) definiert wird.

6. Struktur (10) nach einem der vorhergehenden Ansprüche, wobei die Zellen (12) im Querschnitt sechseckig sind und dadurch eine aufrecht stehende Wabenstruktur definieren.

7. Struktur (10) nach einem der vorhergehenden Ansprüche, wobei die eine oder mehrere geometrische Eigenschaft der Zellen (12), die über den Bereich der Oberfläche der Stützstruktur (10) variiert, eine beliebige oder eine beliebige Kombination aus der Zellhöhe, der Zellbreite, der Zelllänge, der Zellform und/oder der Trennwanddicke ist.

8. Struktur (10) nach einem der vorhergehenden Ansprüche, wobei die Struktur (10) einer aufgebrachten Belastung entsprechend einem dritten Modus des mechanischen Verhaltens widersteht, wobei der dritte Modus eine federnde und/oder elastische Kompression der zusammengefallenen Trennwände (16) über einen zweiten Schwellenwert hinaus für die aufgebrachte Last umfasst, wobei der zweite Schwellenwert einen Dehnungsschwellenwert umfasst.

9. Struktur (10) nach einem der vorhergehenden Ansprüche, wobei die aufrecht stehenden Trennwände (16) einen Stapel von länglichen Trägern (20) umfassen, die übereinander liegen.

10. Struktur (10) nach Anspruch 9, wobei zwischen den länglichen Trägern (20) der aufrecht stehenden Trennwände (22) die länglichen Träger (20) benachbarter Trennwände (24) eingefügt sind.

11. Struktur (10) nach einem der vorhergehenden Ansprüche, wobei jede Zelle (12) eine angrenzende Trennwand (16) oder einen angrenzenden Trennwandabschnitt mit mindestens einer angrenzenden Zelle (12) teilt.

12. Struktur (10) nach einem der vorhergehenden Ansprüche, wobei die Struktur (10) durch einen additiven Fertigungsprozess gefertigt wird.

13. Struktur (10) nach Anspruch 12, wobei der additive Fertigungsprozess 3D-Drucken ist.

14. Verfahren zum Herstellen der Struktur (10) nach einem der vorhergehenden Ansprüche, umfassend Erhalten einer Druckverteilung auf einem Fußbett für einen im Gebrauch zu stützenden Körper, Bestimmen eines oder mehrerer mechanischer Parameter für die Struktur (10), die das Netzwerk aus elastisch aufrecht stehenden Trennwänden umfasst, wobei die aufrecht stehenden Trennwände (16) eine Vielzahl von Zellen (12) dazwischen definieren, wobei sich jede aufrecht stehende Trennwand (16) im Gebrauch in einer Richtung einer aufgebrachten Last erstreckt, wobei der eine oder die mehreren mechanischen Parameter eine beliebige oder beliebige Kombination aus Zelldichte, Zellform, Zellhöhe und/oder Wanddicke umfasst, wobei der mechanische Parameter über die Struktur entsprechend einer gewünschten mechanischen Reaktion auf die Druckverteilung variiert, und Herstellen der Stützstruktur (10) mit der Variation in dem einen oder mehreren mechanischen Parameter durch die Struktur.

15. Herstellungsverfahren nach Anspruch 14, wobei die Struktur (10) durch einen additiven Fertigungsprozess gefertigt wird.

## Revendications

1. Structure d'amortissement (10) d'un article chaussant pour un corps humain ou animal, la structure comprenant :
un réseau de cloisons verticales résilientes (16), les cloisons verticales (16) définissant une pluralité de cellules (12) entre elles et chaque cloison verticale (16) s'étendant dans une direction entre des surfaces principales opposées de la structure d'amortissement (10), lesdites cloisons (16) comprenant un matériau polymère et étant conçues pour résister à une charge appliquée à une surface principale de la structure de support (10) dans deux modes, un premier mode comprenant une compression résiliente des cloisons verticales (16) jusqu'à un premier seuil de chargement et un second mode comprenant un affaissement réversible des cloisons verticales (16) au-delà du premier seuil de chargement,
une ou plusieurs propriétés géométriques des cellules (12) à l'intérieur du réseau étant adaptées pour obtenir le comportement en réponse à une charge appliquée, et
ladite ou lesdites propriétés géométriques des cellules (12) variant sur la zone de la surface de structure de support (10) selon une distribution de pression prédite de la charge appliquée sur la structure de support (10) lors de l'utilisation.

2. Structure (10) selon la revendication 1, chaque cellule (12) comprenant une pluralité de cloisons attenantes (16), ledit affaissement réversible d'une cloison (16) entraînant la distribution de charge sur la pluralité de cloisons attenantes (16), entraînant ainsi potentiellement l'affaissement d'une ou plusieurs desdites cloisons adjacentes attenantes (16).

3. Structure (10) selon une quelconque revendication précédente, ladite densité de cellules des cellules (12) à l'intérieur du réseau étant adaptée pour obtenir le comportement en réponse à une charge appliquée.

4. Structure (10) selon la revendication 3, ladite propriété géométrique des cellules (12) qui varie sur la zone de la surface de structure de support (10) selon une distribution de pression prédite de la charge appliquée sur la structure de support (10) lors de l'utilisation étant la densité cellulaire.

5. Structure (10) selon une quelconque revendication précédente, ledit réseau de cloisons verticales (16) étant prévu selon un motif régulier et/ou répétitif, définissant ainsi une matrice régulière de cellules polygonales ou circulaires (12).

6. Structure (10) selon une quelconque revendication précédente, lesdites cellules (12) possédant une section hexagonale, définissant ainsi une structure en nid d'abeilles verticale.

7. Structure (10) selon une quelconque revendication précédente, ladite ou lesdites propriétés géométriques des cellules (12) qui varient sur la zone de la surface de structure de support (10) étant l'une quelconque ou une combinaison quelconque de la hauteur de cellule, de la largeur de cellule, de la longueur de cellule, de la forme de cellule et/ou de l'épaisseur de cloison.

8. Structure (10) selon une quelconque revendication précédente, ladite structure (10) résistant à une charge appliquée selon un troisième mode de comportement mécanique, le troisième mode comprenant une compression résiliente et/ou élastique des cloisons affaissées (16) au-delà d'un second seuil pour la charge appliquée, ledit second seuil comprenant un seuil de déformation.

9. Structure (10) selon une quelconque revendication précédente, lesdites cloisons verticales (16) comprenant un empilement de poutres allongées (20) superposées les unes sur les autres.

10. Structure (10) selon la revendication 9, lesdites poutres allongées (20) des cloisons verticales (22) étant intercalées avec les poutres allongées (20) des cloisons attenantes (24).

11. Structure (10) selon une quelconque revendication précédente, chaque cellule (12) partageant une cloison (16) attenante ou une partie de cloison attenante avec au moins une cellule adjacente (12).

12. Structure (10) selon une quelconque revendication précédente, ladite structure (10) étant fabriquée par un procédé de fabrication additive.

13. Structure (10) selon la revendication 12, ledit processus de fabrication additive étant une impression 3D.

14. Procédé de production de la structure (10) selon une quelconque revendication précédente, comprenant l'obtention d'une distribution de pression sur une semelle plantaire pour un corps à supporter lors de l'utilisation, la détermination d'un ou plusieurs paramètres mécaniques pour la structure (10) comprenant le réseau de cloisons verticales résilientes, les cloisons verticales (16) définissant une pluralité de cellules (12) entre elles, chaque cloison verticale (16) s'étendant dans la direction d'une charge appliquée lors de l'utilisation, ledit ou lesdits paramètres mécaniques comprenant l'une quelconque ou une quelconque combinaison de la densité de cellule, de la forme de cellule, de la hauteur de cellule et/ou de l'épaisseur de paroi, ledit paramètre mécanique variant sur la structure selon une réponse mécanique souhaitée à la distribution de pression, et la fabrication de la structure de support (10) possédant ladite variation dans le ou les paramètres mécaniques à travers la structure.

15. Procédé de production selon la revendication 14, ladite structure (10) étant fabriquée par un procédé de fabrication additive.
